# EUROPEAN PATENT APPLICATION

(11) **EP 4 759 874 A1**
(43) Date of publication of application: **17.06.2026**
(21) Application number: 25000117.9
(22) Date of filing: 10.12.2025
(51) Int. Cl.: C08L 25/06, C08L 55/02, C08L 67/00, C08K 7/14, B09B 3/35, C08J 11/06, B29B 7/90, B29B 9/06, C08J 5/04

(54) **METHOD FOR PRODUCING A COMPOSITE BASED ON POLY (ACRYLONITRILE-CO-BUTADIENE-CO-STYRENE) (ABS) OR POLYSTYRENE (PS)**

(30) Priority: 11.12.2024 PL 45053624
(71) Applicant: Siec Badawcza Lukasiewicz - Instytut Materialow Polimerowych, 87-100 Torun (PL); Siec Badawcza Lukasiewicz - Warszawski Instytut Technologiczny, 01-796 Warszawa (PL); SIEC BADAWCZA LUKASIEWICZ-INSTYTUT LOTNICTWA, 02-256 Warszawa (PL); Siec Badawcza Lukasiewicz - Instytut Ciezkiej Syntezy Organicznej "Blachownia", 47-225 Kedzierzyn-Kozle (PL)
(72) Inventor: Krasinskyi, Volodymyr, 87-100 Torun (PL); Bajer, Krzysztof, 87-100 Torun (PL); Malinowski, Rafal, 87-721 Raciazek (PL); Krasinska, Oksana, 87-100 Torun (PL); Raszkowska-Kaczor, Aneta, 87-100 Torun (PL); Kaczor, Daniel, 87-100 Torun (PL)

(57) **Abstract**

The subject of the invention is a method for producing a composite based on poly(acrylonitrile-co-butadiene-co-styrene) (ABS) or polystyrene (PS) intended for further processing and manufacture of products for, among others, the construction and gardening industries, including the production of boards, profiles, and thermal and vibration insulation materials. The method of producing a composite based on poly(acrylonitrile-co-butadiene-co-styrene) (ABS) or polystyrene (PS) consists in grinding waste from wind turbine blades (rGF), containing glass fiber and polyester resin in an amount of 10 to 70% by weight, is mixed with ABS or recycled ABS (rABS) with a melt flow index of 5 to 50 g/10min (220°C, 10 kg) or mixed with PS or recycled PS (rPS) with a melt flow index of 4 to 30 g/10 min (220°C, 10 kg) in an amount of 90 to 30% by weight, wherein the regrind of wind turbine blades (rGF), containing glass fiber and polyester resin with a particle size of 1 to 12 mm in an amount of 85 to 97% by weight is pre-mixed with a modifier in an amount of 15 to 3% by weight.

## Description

The subject of the invention is a method for producing a composite based on poly(acrylonitrile-co-butadiene-co-styrene) (ABS) or polystyrene (PS) intended for further processing and the manufacture of products for, among others, the construction and gardening industries, including the production of boards, profiles, and thermal and vibration insulation materials.

Wind energy is a clean, renewable, inexhaustible, and efficient source of energy. With the rapid development of wind energy, the demand for wind turbine blades is growing. It is estimated that for every 1 kW of new energy, 10 kg of material is needed for blades, which currently have a service life of 20-25 years. After this period, the blades will be decommissioned and within a few years, more than 40,000 tons of used blades may find their way onto the market. Currently, wind turbine blades are mainly made of thermosetting composite materials with a resin matrix reinforced with glass fiber (GF), carbon fiber (CF), or a GF/CF hybrid. However, these composites are difficult to recycle and cannot be remelted or reformed. Current disposal methods include open-air storage, landfill, or incineration. However, these methods prevent the rational reuse of resources and cause environmental pollution. For environmental protection and sustainable development, the best way to deal with used propellers is to recycle and reuse them, so that wind energy can become truly "clean energy."

Application description CN 115926848 A discloses a device for processing used wind turbine blades, which includes a pyrolysis unit, a decarbonization and reforming unit, and a heating unit, wherein the pyrolysis unit includes a feeding device and a pyrolysis device. The processing method comprises the following steps: (1) performing pyrolytic treatment on the wind turbine blade to obtain a pyrolysis product; and (2) performing decarbonization reforming treatment on the pyrolysis product obtained in step (1) in a reforming gas atmosphere to obtain a target product.

A method known from the description of application CN 115780467 A for recovering glass fibers and carbon powder from used wind turbine blades. The method comprises the following steps: (1) crushing used wind turbine blades; (2) placing the crushed particles in an organic solvent containing a foaming agent; (3) carrying out a pyrolytic reaction on the particles drained in step (2) in an inert atmosphere at a pyrolysis temperature of 300-350°C for 1-2 hours to produce a mixture of cracked carbon and glass fibers; and (4) ball milling the mixture of cracked carbon and glass fibers to produce carbon powder and cut glass fibers.

Application description CN115611609A discloses a method for producing water-permeable bricks from waste wind turbine blades. The method comprises the following steps: (1) crushing wind turbine blades to obtain crushed material with a particle size of 1-10 mm and crushed material with a particle size less than or equal to 80 Mesh; (2) separately soaking the crushed materials in organic solvents; (3) mixing the resulting mixtures with each other and with calcium carbonate and fly ash, and curing; (4) mixing the cured product with clay, expanded perlite, and water, and pressing the material to form bricks; and (5) curing the bricks in an autoclave and sintering them in a furnace.

The CN117106234A application description discloses a method for obtaining a modifier for asphalt from wind turbine blade waste, which comprises the following steps: (1) crushing and screening recycled wind turbine blades to obtain waste powder; (2) reacting the waste powder obtained in step (1) with silane hydrolysate and drying to obtain an asphalt modifier. The asphalt modifier produced by this method can modify asphalt during hot mixing and has a high-quality effect on improving the performance of asphalt.

The CN116274288 A application description presents a method for processing waste wind turbine blades, which includes the following steps: (1) cutting the waste wind turbine blades into blocks, then crushing the blocks and collecting the crushed aggregate with a particle size of 0.5-10 mm; (2) carrying out the first stage of calcination of the crushed material obtained in stage (1), then soaking the calcined product in an acid solution, filtering and washing and drying the filtration residue to obtain material S; (3) mixing material S with a roasting additive, carrying out the second stage of roasting, sieving the roasted product and collecting aggregates with a grain size of 0.425-20 mm; and (4) carrying out the third stage of calcination of the crushed material obtained in stage (3). According to the method, a glass fiber product with a wide range of applications can be obtained.

The application description WO2020148484A1 discloses a multilayer product comprising at least two or more layers, wherein at least one or two layers comprise fiber-reinforced thermoset waste materials bonded into a thermoplastic matrix. The thermoplastic matrix and thermosetting material and fibers are partially chemically bonded to each other by one or more adhesives or coupling agents.

Application description ES2820854T3 discloses a method for producing a polymer composition containing thermoplastic and thermosetting material, comprising: mixing particles of thermoplastic polymer material and particles of a thermosetting composition containing a cured thermosetting polymer, which may contain reinforcing fibers, wherein the mixing comprises raising the temperature of the composition and at least partially melting the surface of the particles of the thermoplastic polymer material and simultaneously mixing the particles, which allows the particles of the thermosetting composition to adhere to the particles of the thermoplastic polymer material, and cooling the composition.

Based on the above state of the art, it is concluded that the main methods of recycling used wind turbine blades are incineration (pyrolysis) or chemical degradation with the recovery of glass fibers.

The aim of the invention is to develop a method for the direct use of shredded wind turbine blade waste as a filler for ABS (virgin or recycled (rABS)) or PS (virgin or recycled (rPS)) to obtain a polymer composite for further processing using conventional machines and modern plastic processing techniques.

The method of producing a composite based on poly(acrylonitrile-co-butadiene-co-styrene) (ABS) or polystyrene (PS) consists in grinding wind turbine blade waste (rGF), containing glass fiber and polyester resin in an amount of 10 to 70% by weight, is mixed with ABS or recycled ABS (rABS) with a melt flow index of 5 to 50 g/10min (220°C, 10 kg) or mixed with PS or recycled PS (rPS) with a melt flow index of 4 to 30 g/10 min (220°C, 10 kg) in an amount of 90 to 30% by weight, wherein the regrind of wind turbine blades (rGF), containing glass fiber and polyester resin with a particle size of 1 to 12 mm in an amount of 85 to 97% by weight is pre-mixed with a modifier in an amount of 15 to 3% by weight.

Compounds based on chlorinated polyethylene (CPE) and/or styrene-ethylene-butylene-styrene (SEBS) rubber and/or styrene-butylene-styrene (SBS) rubber and/or styrene-isoprene-styrene (SIS) rubber are used as modifiers.

The modifier is mixed with regrind from wind turbine blades (rGF) in a mixer equipped with a rotary agitator that rotates at a constant speed of between 10 and 80 rpm.

The mixing of the components is carried out for a period of not less than 5 minutes.

The ingredients are mixed at ambient temperature, preferably at a temperature of 5-30°C.

The mixture of wind turbine blade waste (rGF) with a modifier and ABS or PS is fed into a plasticizing system, preferably a co-rotating twin-screw extruder, where it is homogenized and plasticized, and then transferred to an extrusion die head and granulated in a known manner.

The extrusion process is carried out at a temperature of 200 to 230°C, with screw speeds in the range of 150-250 rpm.

The method according to the invention produces an ABS- or PS-based composite intended for the production of composite granules for further processing, as well as for the production of various types of products, especially in the single-screw extrusion, injection, or pressing process.

The results of mechanical tests on static tensile strength, Charpy impact strength, and melt flow rate (MFR) of selected test samples made from an example composite based on regranulate (rABS) with a content of 10-70% by weight of wind turbine blade waste regrind without a modifier and with a content of 7% by weight of a chlorinated polyethylene (CPE) modifier, are shown in this table.

**Table**

| | MFR (220°C, 10 kg), [g/10 min] | Impact strength [kJ/m²] | Tensile strength at break [MPa] | Longitudinal elastic modulus [MPa] |
|---|---|---|---|---|
| rABS (without filling) | 32.0 ±1.0 | 11.3 ±0.4 | 38.1 ±0.5 | 1599 ±62 |
| rABS/rGF 90/10 | 26.0 ±0.4 | 4.0 ±0.1 | 38.5 ±0.2 | 1813 ±74 |
| rABS /rGF 70/30 | 16.0 ±0.4 | 1.9 ±0.2 | 43.5 ±1.1 | 2440 ±86 |
| rABS /rGF 50/50 | 8.4 ±0.2 | 1.4 ±0.1 | 45.3 ±3.1 | 3202 ±101 |
| rABS /rGF 30/70 | 2.1±0.2 | 0.8±0.2 | 45.8±2.9 | 3325±102 |
| rABS /rGF 70/30 with CPE | 8.2 ±0.2 | 2.4 ±0.1 | 33.1 +1.5 | 2569 ±55 |
| rABS /rGF 50/50 with CPE | 4.6 ±0.2 | 1.8 ±0.1 | 36.2 ±1.2 | 3572 ±63 |
| rABS /rGF 30/70 with CPE | 1.2 ±0.1 | 1.3 ±0.1 | 34.3 ±1.2 | 4146 ±80 |

Results of mechanical tests for static tensile strength, Charpy impact strength, and melt flow index (MFR) of selected test samples made from a sample composite based on regranulate (rPS) containing 50% by weight of wind turbine blade waste regrind with various modifiers are shown in this table.

**Table**

| Sample | MFR (220°C, 10 kg), [g/10 min] | Impact strength [kJ/m² ] | Tensile strength at break [MPa] | Longitudinal elastic modulus [MPa] |
|---|---|---|---|---|
| rPS (without filling) | 6.4 ±0.1 | 6.7 ±0.1 | 25.0 ±0.2 | 1464 ±60 |
| rPS/rGF 50/50 | 1.9 ±0.1 | 2.0 ±0.2 | 29.5 ±0.7 | 2861 ±85 |
| rPS/rGF 50/50 with 10% SIS | 5.1 ±0.1 | 4.4 ±0.1 | 18.6 ±0.8 | 2010 ±59 |
| rPS/rGF 50/50 with 10% SEBS | 2.1 ±0.1 | 3.5 ±0.1 | 31.5 ±0.4 | 2427 ±90 |
| rPS/rGF 50/50 with 10% SBS | 1.0 ±0.1 | 3.1 ±0.1 | 21.1 ±0.5 | 2375 ±65 |
| **rPS/rGF** 50/50 z (5% SEBS + 3% SIS) | 4.1 ±0.1 | 3.6 ±0.1 | 27.2 ±0.8 | 2165 ±63 |

The subject matter of the invention is further illustrated by the following examples of implementation, without limiting its scope.

### Example I.

Wind turbine blade waste with a particle size of 1 to 3 mm, comprising 90% by weight, containing glass fiber and polyester resin, is mixed with a CPE-based modifier comprising 10% by weight at a temperature of 18°C for 6 minutes. The above components are mixed in a mixer equipped with a rotary agitator that rotates at a constant speed of 50 rpm. The homogenized mixture in an amount of 10% by weight and rABS, with a mass flow rate of 16 g/10 min (220°C, 10 kg) in an amount of 90% by weight, are separately introduced into the plasticizing system of a co-rotating twin-screw extruder, where, after homogenization and plasticization, the said composite is transferred to an extrusion die head and granulated. The mixture of components is plasticized and processed at a temperature of the plasticizing system of a co-rotating twin-screw extruder of 200 to 225°C, where 200°C corresponds to the feed zone and 225°C corresponds to the dosing zone at screw speeds of 150 rpm.

### Example II.

Wind turbine blade waste with a particle size of 4 to 7 mm in an amount of 93% by weight, containing glass fiber and polyester resin, is mixed with a CPE-based modifier in an amount of 7% by weight at a temperature of 20°C for 7 minutes. The above components are mixed in a mixer equipped with a rotary agitator rotating at a constant speed of 30 rpm. The homogenized mixture in an amount of 30% by weight and rABS with a mass flow rate of 32 g/10 min (220°C, 10 kg) in an amount of 70% by weight are separately introduced into the plasticizing system of a co-rotating twin-screw extruder, where, after homogenization and plasticization, the said composite is transferred to an extrusion die head and granulated. The mixture of components is plasticized and processed at a temperature of the plasticizing system of the co-rotating twin-screw extruder of 210 to 230°C, where 210°C corresponds to the feed zone and 230°C corresponds to the dosing zone at screw speeds of 200 rpm.

### Example III.

Wind turbine blade waste with a particle size of 8 to 10 mm in an amount of 85% by weight, containing glass fiber and polyester resin, is mixed with a CPE-based modifier in an amount of 15% by weight at a temperature of 25°C for 5 minutes. The components are mixed in a mixer equipped with a rotary agitator that rotates at a constant speed of 60 rpm. The homogenized mixture in an amount of 50% by weight and rABS with a mass flow rate of 40 g/10 min (220°C, 10 kg) in an amount of 50% by weight are separately introduced into the plasticizing system of a co-rotating twin-screw extruder, where, after homogenization and plasticization, the said composite is transferred to an extrusion die head and granulated. The mixture of components is plasticized and processed at a temperature of the plasticizing system of the co-rotating twin-screw extruder of 220 to 230°C, where 220°C corresponds to the feed zone and 230°C corresponds to the metering zone at screw speeds of 220 rpm.

### Example IV.

Wind turbine blade waste with a particle size of 1 to 7 mm in an amount of 93% by weight, containing glass fiber and polyester resin, is mixed with a CPE-based modifier in an amount of 7% by weight at a temperature of 20°C for 7 minutes. The components are mixed in a mixer equipped with a rotary agitator that rotates at a constant speed of 70 rpm. The homogenized mixture in an amount of 70% by weight and rABS with a mass flow rate of 50 g/10 min (220°C, 10 kg) in an amount of 30% by weight are separately introduced into the plasticizing system of a co-rotating twin-screw extruder, where, after homogenization and plasticization, the said composite is transferred to an extrusion die head and granulated . The mixture of components is plasticized and processed at a temperature of the plasticizing system of the co-rotating twin-screw extruder of 220 to 230°C, where 220°C corresponds to the feed zone and 230°C corresponds to the dosing zone at screw speeds of 250 rpm.

### Example V.

Wind turbine blade waste with a particle size of 10 to 12 mm in an amount of 90% by weight, containing glass fiber and polyester resin, is mixed with an SEBS-based modifier in an amount of 10% by weight at a temperature of 18°C for 8 minutes. The components are mixed in a mixer equipped with a rotary agitator that rotates at a constant speed of 80 rpm. The homogenized mixture in an amount of 50% by weight and rABS with a mass flow rate of 45 g/10 min (220°C, 10 kg) in an amount of 50% by weight are separately introduced into the plasticizing system of a co-rotating twin-screw extruder, where, after homogenization and plasticization, the said composite is transferred to an extrusion die head and granulated. The mixture of components is plasticized and processed at a temperature of the plasticizing system of the co-rotating twin-screw extruder of 220 to 230°C, where 220°C corresponds to the feed zone and 230°C corresponds to the dosing zone at screw speeds of 250 rpm.

### Example VI.

Wind turbine blade waste with a particle size of 1 to 3 mm, accounting for 95% by weight, containing glass fiber and polyester resin, is mixed with a CPE-based modifier in an amount of 5% by weight at a temperature of 18°C for 6 minutes. The above components are mixed in a mixer equipped with a rotary agitator that rotates at a constant speed of 50 rpm. The homogenized mixture in an amount of 10% by weight and rPS, with a mass flow rate of 15 g/10 min (220°C, 10 kg) in an amount of 90% by weight, are separately introduced into the plasticizing system of a co-rotating twin-screw extruder, where, after homogenization and plasticization, the said composite is transferred to an extrusion die head and granulated. The mixture of components is plasticized and processed at a temperature of the plasticizing system of the co-rotating twin-screw extruder of 200 to 220°C, where 200°C corresponds to the feed zone and 220°C corresponds to the dosing zone at screw speeds of 150 rpm.

### Example VII.

Wind turbine blade waste with a particle size of 4 to 7 mm in an amount of 90% by weight, containing glass fiber and polyester resin, is mixed with an SBS-based modifier in an amount of 10% by weight at a temperature of 18°C for 7 minutes. The above components are mixed in a mixer equipped with a rotary agitator rotating at a constant speed of 30 rpm. The homogenized mixture in an amount of 30% by weight and rPS with a mass flow rate index of 15 g/10 min (220°C, 10 kg) in an amount of 70% by weight are separately introduced into the plasticizing system of a co-rotating twin-screw extruder, where, after homogenization and plasticization, the said composite is transferred to an extrusion die head and granulated. The mixture of components is plasticized and processed at a temperature of the plasticizing system of the co-rotating twin-screw extruder of 200 to 220°C, where 200°C corresponds to the feed zone and 220°C corresponds to the dosing zone at screw speeds of 200 rpm.

### Example VIII.

Wind turbine blade waste with a particle size of 8 to 10 mm in an amount of 90% by weight, containing glass fiber and polyester resin, is mixed with a SIS-based modifier in an amount of 10% by weight at a temperature of 25°C for 5 minutes. The components are mixed in a mixer equipped with a rotary agitator that rotates at a constant speed of 60 rpm. The homogenized mixture in an amount of 50% by weight and rPS with a mass flow rate of 6 g/10 min (220°C, 10 kg) in an amount of 50% by weight are separately introduced into the plasticizing system of a co-rotating twin-screw extruder, where, after homogenization and plasticization, the said composite is transferred to an extrusion die head and granulated. The mixture of components is plasticized and processed at a temperature of the plasticizing system of the co-rotating twin-screw extruder of 210 to 220°C, where 210°C corresponds to the feed zone and 220°C corresponds to the dosing zone at screw speeds of 220 rpm.

### Example IX.

Wind turbine blade waste with a particle size of 1 to 7 mm in an amount of 90% by weight, containing glass fiber and polyester resin, is mixed with an SEBS-based modifier in an amount of 10% by weight at a temperature of 20°C for 7 minutes. The components are mixed in a mixer equipped with a rotary agitator that rotates at a constant speed of 70 rpm. The homogenized mixture in an amount of 70% by weight and rPS with a mass flow rate of 20 g/10 min (220°C, 10 kg) in an amount of 30% by weight are separately introduced into the plasticizing system of a co-rotating twin-screw extruder, where, after homogenization and plasticization, the said composite is transferred to an extrusion die head and granulated. The mixture of components is plasticized and processed at a temperature of the plasticizing system of the co-rotating twin-screw extruder of 200 to 220°C, where 200°C corresponds to the feed zone and 220°C corresponds to the dosing zone at screw speeds of 250 rpm.

### Example X.

Wind turbine blade waste with a particle size of 1 to 12 mm in an amount of 92% by weight, containing glass fiber and polyester resin, is mixed with SEBS-based modifiers in an amount of 5% by weight and SIS-based modifiers in an amount of 3% by weight at a temperature of 18°C for 8 minutes. The components are mixed in a mixer equipped with a rotary agitator that rotates at a constant speed of 80 rpm. The homogenized mixture in an amount of 50% by weight and rPS with a mass flow rate index of 6.4 g/10 min (220°C, 10 kg) in an amount of 50% by weight are separately introduced into the plasticizing system of a co-rotating twin-screw extruder, where, after homogenization and plasticization, the said composite is transferred to an extrusion die head and granulated. The mixture of components is plasticized and processed at a temperature of the plasticizing system of the co-rotating twin-screw extruder of 200 to 220°C, where 200°C corresponds to the feed zone and 220°C corresponds to the metering zone at screw speeds of 250 rpm.

Although the invention has been explained using selected examples of implementation, it is understood that multiple modifications are possible, except for the limitations contained in the patent claims.

## Claims

1. A method for producing a composite based on poly(acrylonitrile-co-butadiene-co-styrene) (ABS) or polystyrene (PS), **characterized in that** regrind from wind turbine blades (rGF), containing glass fiber and polyester resin in an amount of 10 to 70% by weight, is mixed with ABS or recycled ABS (rABS) with a melt flow index of 5 to 50 g/10min (220°C, 10 kg) or mixed with PS or recycled PS (rPS) with a melt flow index of 4 to 30 g/10 min (220°C, 10 kg) in an amount of 90 to 30% by weight, wherein the regrind of wind turbine blades (rGF), containing glass fiber and polyester resin with a particle size of 1 to 12 mm in an amount of 85 to 97% by weight is premixed with the modifier in an amount of 15 to 3% by weight.

2. The method according to claim 1 is **characterized in that** compounds based on chlorinated polyethylene (CPE) and/or styrene-ethylene-butylene-styrene rubber (SEBS) and/or styrene-butylene-styrene rubber (SBS) and/or styrene-isoprene-styrene rubber (SIS) are used as modifiers.

3. The method according to claim 1 is **characterized in that** the mixing of the wind turbine blade waste (rGF) with the modifier is carried out in a mixer equipped with a rotary agitator that rotates at a constant speed in the range of 10 to 80 rpm.

4. The method according to claim 1 is **characterized in that** the mixing of the components is carried out for a period of not less than 5 minutes.

5. The method according to claim 1, **characterized in that** the mixing of the components is carried out at ambient temperature, preferably at a temperature of 5-30°C.

6. The method according to claim 1, **characterized in that** the mixture of ground waste from wind turbine blades (rGF) with a modifier and with ABS or recycled ABS (rABS) or PS or recycled PS (rPS) is introduced into the plasticizing system, preferably a co-rotating twin-screw extruder, where it is homogenized and plasticized, then transferred to an extrusion die head and granulated in a known manner.

7. The method according to claim 6 is **characterized in that** the extrusion process is carried out at a temperature of 200 to 230°C, with screw speeds in the range of 150-250 rpm.
